# EUROPEAN PATENT APPLICATION

(11) **EP 4 574 316 A1**
(43) Date of publication of application: **25.06.2025**
(21) Application number: 23220130.1
(22) Date of filing: 22.12.2023
(51) Int. Cl.: B23B 27/10, B23C 5/00, B23C 5/28

(54) **CUTTING TOOL COMPONENT FOR A METAL CUTTING TOOL**

(71) Applicant: Seco Tools Tooling Systems, 67330 Bouxwiller (FR)
(72) Inventor: HOPFNER, Sébastien, 673 30 Bouxwiller (FR)
(74) Representative: Sandvik

(57) **Abstract**

The present invention relates to a cutting tool component for a metal cutting tool, wherein the component comprises a main body (8). The main body (8) comprises an internal fluid channel (5) extending from an upstream end (6) forward to a downstream end. The internal fluid channel (5) comprises a main channel (9) which has a main front end and a main central axis (12), wherein the main channel (9) extends from the main front end rearward along the main central axis (12) toward the upstream end (6). The main channel (12) has a plurality of openings (13) at the main front end. The internal fluid channel (5) comprises a plurality of distribution channels (10), wherein each distribution channel (10) extends from a respective one of the openings (13) forward toward the downstream end. The cutting tool component further comprises a deflection element (17), which deflection element (17) comprises a deflection surface (18) arranged in the main channel (9), wherein the deflection surface (18) has a front edge (19) at each respective opening and converges rearward from the front edge (19) toward the main central axis (12).

## Description

### Technical field

The present invention relates to a cutting tool component for a metal cutting tool, wherein the cutting tool component comprises an internal fluid channel.

### Background

EP 3782751 A1 discloses a milling cutter having a plurality of inserts seats for receiving a respective cutting insert each. The milling cutter comprises a liquid supply system for supplying coolant to the cutting inserts. The system comprises a central channel which extends axially forward from a rear end of tool along a central axis of the tool. Distribution channels extend from the central main axis radially outward to one respective outlet. The coolant is brought to associated cutting insert by further channels extending from the outlet.

A problem with this known device is that it is not suitable for minimum quantity lubricating (MQL) machining. When the known tool is used for MQL machining, the small droplets of the fluid tend to merge into larger volumes. Thereby, instead of a carefully selected mixture of liquid and gas, only liquid is supplied to the cutting inserts. Due to the small quantity of liquid in the fluid mixture, supply of only liquid to the cutting insert is often insufficient.

### Summary

It is an object of the present invention to at least partly obviate the above-mentioned problem. This object is achieved according to the invention by means of a cutting tool component as defined in claim 1.

An inventive cutting tool component for a metal cutting tool comprises a main body, which main body comprises an internal fluid channel extending from an upstream end forward to a downstream end, and which internal fluid channel comprises
- a main channel which has a main front end and a main central axis, wherein the main channel extends from the main front end rearward along the main central axis toward the upstream end, and wherein the main channel has a plurality of openings at the main front end, and
- a plurality of distribution channels, wherein each distribution channel extends from a respective one of the openings forward toward the downstream end, wherein
the cutting tool component further comprises a deflection element, which deflection element comprises a deflection surface arranged in the main channel, wherein the deflection surface has a front edge at each respective opening and converges rearward from the front edge toward the main central axis.

Thanks to the inventive deflection element with the deflection surface, a fluid flowing through the main channel is redirected in an upstream location relative the openings in the main channel instead of at the openings. Furthermore, due to the extension of the deflection surface, the directional change takes place along the deflection surface and is thus less abrupt. Thereby, turbulence is avoided such that a main cause for droplets forming larger liquid volumes is reduced.

The present invention relates to a cutting tool component for a metal cutting tool, such as a cutting tool for chip removing machining from a metal workpiece.

Optionally, the cutting tool component is an integral, one-piece unit, for example a tool comprising integral cutting edges, or a unit comprised of several parts. Preferably, the cutting tool component is a tool holder. Optionally, the tool holder has insert seats for cutting inserts or is arranged for carrying a cutting head with cutting edges or insert seats for cutting inserts. Preferably, the cutting tool component, for example the tool holder, has a rear end with a coupling section for connecting the cutting tool component to a machine, for example a spindle. Optionally, the cutting tool component, for example the tool holder, is connectable to a cutting head via an adapter and/or to a machine via and adapter.

The cutting tool component comprises a main body. An internal fluid channel is arranged in the main body and extends form an upstream end forward toward a downstream end. Preferably, the forward direction is from a rear end of the main body, for example comprising the coupling section, toward a front end of the main body. According to an embodiment, the front end of the main body comprises outlets, for example at cutting edges or insert seats, or in positions for fluid connection with further channels of other tool components such as for example a cutting head.

The internal fluid channel is suitable for conveying fluid from the upstream end to the downstream end. The fluid is for example coolant fluid, lubrication fluid or a combination thereof. The fluid is for example gas, liquid, or a combination thereof. Preferably, the fluid is suitable for minimum quantity lubricating (MQL) machining and is in form of droplets or mist.

According to an embodiment, the cutting tool component is comprised in a cutting tool, such as for example a drilling tool, a turning tool or a boring tool. Preferably, the cutting tool is a milling tool. According to an embodiment, the cutting tool further comprises a nozzle for generating such minimum quantity lubricating (MQL). For example, the nozzle is configured to eject fluid in form of droplets or mist into the main channel from an upstream end thereof. Thus, the cutting tool component according to the present invention is suitable for use in minimum quantity lubricating (MQL) machining.

The fluid channel is an internal channel and, except for outlets and inlets, completely surrounded by the main body. Preferably, the fluid channel is a hole drilled into the main body wherein the hole has several sections, which optionally have different cross section and/or extension.

The internal fluid channel comprises a main channel, preferably a single main channel, which has main front end and a main central axis. The main central axis of the main channel defines an axial direction and a radial direction. A direction axially forward is a direction toward the main front end and beyond, wherein the main front end is a downstream end of the main channel. Preferably, the main channel extends in an axial direction of the cutting tool component, for example forward from, and optionally along, a rear coupling section of a tool holder. Preferably, the main channel extends centrally, for example along a center axis, of the main body of the cutting tool component. Preferably, the main channel has a circular cross section and a constant cross-sectional area along a major axial extension.

The main channel has a plurality of openings at the main front end. Preferably, there is at least two and at most twenty openings, and more preferably at least four and at most fourteen openings. Turbulence at the openings is less pronounced for tools having only one distribution channel. It is difficult to fit more sufficiently large openings within cutting tools of size commonly used. Preferably, the openings are spaced circumferentially around the main central axis at the main front end, for example at least a majority of the openings are evenly spaced.

Preferably, the main channel has a rearwardly facing front end surface at the main front end, which front end surfaces comprises the openings. The front end surface is angled relative the main central axis. Alternatively, the plurality of openings are arranged in a circumferential surface of the main channel at the main front end thereof. It is advantageous to arrange the openings in the front end surface because the directional change that is needed for a fluid flowing from the main channel into the openings is less as compared to when openings are arranged in the circumferential surface.

Preferably, the front end surface comprises a frustoconical surface which, from a most forward end of the main channel, diverges rearward toward the upstream end. Thereby the front end surface is suitable to redirect a fluid flowing through the main channel through the openings and further radially outward and forward. Preferably a cone angle γ is at least 120°and at most 150°. Alternatively, the front end surface is perpendicular to the main central axis.

Preferably, the entire front edge of the deflection surface, with respect to the main central axis, is located radially inward of at least a majority of the plurality of openings, preferably each of the plurality of openings. Thereby, a fluid flow through at least most of the plurality of openings is not impeded by the deflection surface.

According to an embodiment, each of the plurality of openings is delimited by a respective opening edge, wherein the front edge of the deflection surface is located in close proximity or contacts at least a majority of the opening edges.

The internal fluid channel further comprises a plurality of distribution channels, which each extends from a respective one of the openings forward toward the downstream end. Thus, the main channel is in fluid communication with each the distribution channels by means of the openings, which function both as outlets for the main channel and as inlets for the distribution channels. Preferably, there is an equal number of openings and distribution channels. Thereby, each opening connects the main channel with one respective distribution channel.

According to an embodiment, each distribution channel has a distribution central axis. The distribution channel has a circular cross section and a constant cross-sectional area along a major axial extension. Preferably, the cross-sectional area of each distribution channel is smaller than the cross section area of the main channel.

Preferably, each distribution channel, with respect to the main central axis, extends radially outward and along a respective distribution central axis. Thereby the cutting tool is operable to supply fluid from a central main channel to radially outward and axially forward and located insert seats or cutting inserts.

According to an embodiment, as seen in a longitudinal section, the distribution central axis of each distribution channels forms an angle β with the main central axis, and the deflection surface forms an angle α with the main central axis, wherein, for at least a majority of the distribution channels, the angle α and the angle β differ at most by 5°, and preferably at most 3°. According to an embodiment, the angle α and the angle β are equal. When the difference is small, a fluid that flows through the main channel is efficiently redirected into the distribution channels by means of the deflection surface. Thereby turbulence is reduced.

According to an embodiment, the deflection element comprises a connection portion, and the main channel comprises a complementary connection portion, which are configured to releasable fix the deflection element in the cutting tool component. Thereby, the deflection element is producible as separate component. The deflection element is fixable in the cutting tool component by means of any suitable connection portions, for example, welding, gluing or dove tail locking. Preferably, the connection portion of the deflection element comprises a tap extending forward through the front end surface into the main body. For example, the tap comprises an external thread that is in engagement with an internal thread in a hole in the front end surface. In the fixed position of the deflection element, the deflection surface is located in the main channel. Alternatively, the deflector element is pressed or shrink fitted in the cutting tool component.

According to a preferred embodiment, the main channel and the deflection element have such relative shape and dimensions that the deflection element is insertable from an upstream end and movable through the main channel to be fixed in the cutting tool component by the connection portion and the complementary connection portion. For example, a maximal cross section of the deflection element in smaller than a minimal cross section of the main channel. Thereby, the production of the cutting tool component is simplified, and, in addition, the deflection element can be retrofitted.

According to an embodiment, the deflection element comprises an abutment surface, which intersects and extends around the front edge of the deflection surface, wherein the abutment surface abuts against the front end surface of the main channel. Thereby, flow of fluid between the deflection element and the front end surface is hindered. Preferably, such flow is prevented thanks to for example high pressure between the surfaces or additional sealing, for example sealing glue or any other sealing suitable.

According to a preferred embodiment, the deflection surface comprises a conical or frustoconical surface. Preferably, the deflection surface constitutes a conical or frustoconical surface. Thereby, the deflection element is independent of the rotational position in the cutting tool component, which is especially beneficial in embodiments where the deflection element is a sperate element fixed in the cutting tool component. Preferably an apex of the conical surface, respectively a center of a frustoconical surface is located on the main central axis.

Preferably, the cutting tool component is comprised in a milling tool, which further comprises a plurality of circumferentially spaced insert seats, wherein each of the distribution channels is in fluid communication with a respective one of the insert seats. When operated in minimum quantity lubricating (MQL) machining, due to a relative high number of circumferentially spaced inserts seats with cutting inserts, the present invention is especially advantageous for milling tools.

### Brief description of the drawings

In the following, example embodiments will be described in greater detail and with reference to the accompanying drawings, in which:
Fig. 1 is a schematic perspective view of a cutting tool in form of a milling tool comprising a cutting head and a cutting tool component in form of a tool holder according to a first embodiment of the present invention;
Fig. 2 is a schematic view of the milling tool of Fig. 1, wherein the tool holder and the cutting head are separated;
Fig. 3 is longitudinal sectional view through a main body the tool holder according to the first embodiment;
Fig. 4 is an enlarged portion of the view of Fig. 2 showing the deflection element in a disconnected position;
Fig. 5 is an enlarged portion of the view of Fig. 3 showing the deflection element;
Fig. 6 is a view corresponding to Fig. 5 of a second embodiment of the present invention; and
Fig. 7 is a cross sectional view downstream toward openings.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

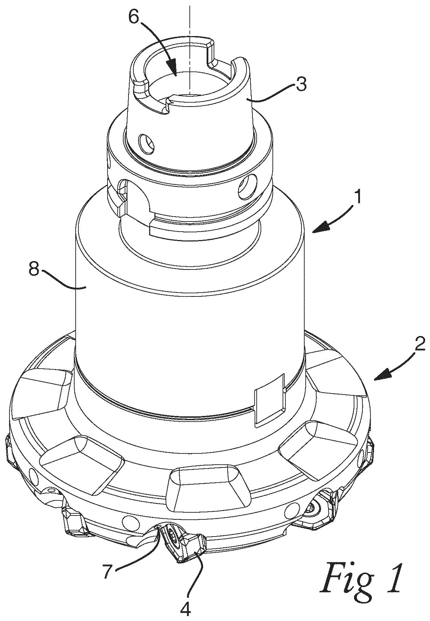

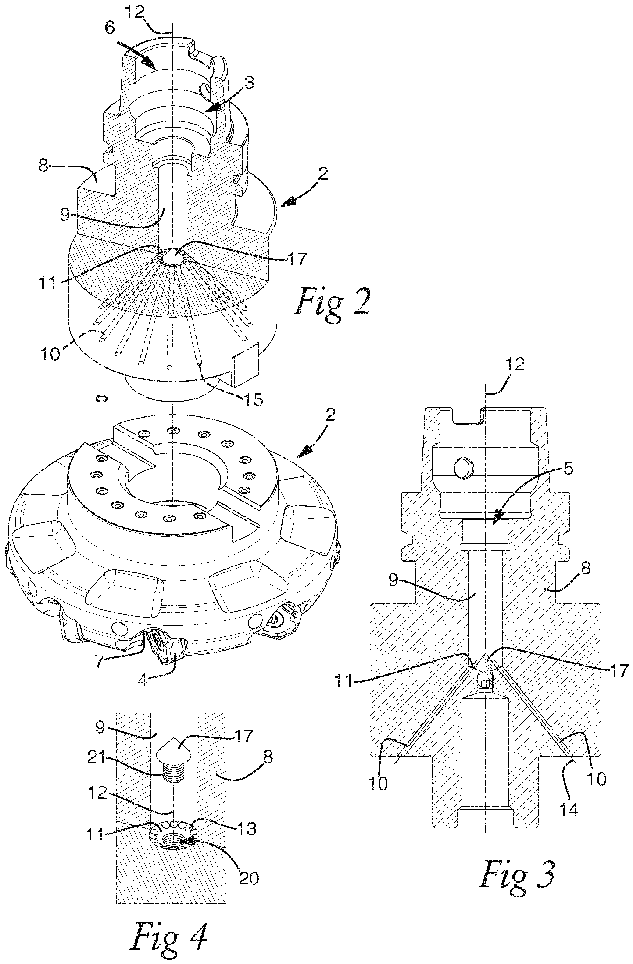

In Figs. 1 and 2, a first embodiment of a cutting tool component according to the present invention is shown. The cutting tool component is a tool holder 1 for carrying a cutting head 2. The tool holder 1 and the cutting head 2 are comprised in a milling tool. The cutting head 2 is attached to the tool holder 1 at a front end thereof. The tool holder 1 has a rear end with a coupling section 3 for connecting the tool holder 1 with the cutting head 2 to a machine spindle. The cutting head 2 comprises a plurality of circumferentially spaced insert seats, wherein a cutting insert 4 is mounted in each insert seat.

The tool holder component 1 comprises a main body 8. The main body 8 comprises an internal fluid channel 5, which extends from an upstream end 6 forward to a downstream end. The downstream end of the internal fluid channel is formed by a plurality of intermediate outlets 15. A nozzle (not shown) is arranged at the upstream end 6 of the main channel 9. The nozzle is configured to eject fluid in form of a mist into the main channel 9. Thus, the milling tool is intended for use in minimum quantity lubricating (MQL) machining.

The main body 8 with the fluid channel 5 according to the first embodiment is shown in Figs. 3-5 and 7. The fluid channel 5 comprises a main channel 9. The main channel 9 has a main central axis 12, which is also the center axis of the main body 8.

The main channel 9 has a circular cross section and a constant cross-sectional area along the axial extension. The main channel has a main front end with a front end surface 11 in form of a frustoconical surface with a cone angle γ of 140°. The frustoconical front end surface 11 diverges axially rearward toward the upstream end 6. A plurality of openings 13 are arranged in the frustoconical front end surface 11, wherein the plurality of openings13 are circumferentially spaced around the main central axis 12. As seen in an axial cross section, the openings 13 are grouped mainly along opposing semicircles. There are fourteen openings 13. There is a central axial hole 20 in the front end surface 11, which is provided with an internal thread.

A plurality of distribution channels 10 extend from a respective one of the openings 13 forward toward the downstream end. Thus, there are fourteen distribution channels 10. Each distribution channel 10 has a distribution central axis 14 and extends radially outward along the distribution central axis 14. Each distribution channel 10 has a circular cross section and a constant cross-sectional area along the axial extension. The cross-sectional area of each distribution channel is smaller than the cross section area of the main channel.

Each distribution channel 10 extends forward and downstream to a respective one of the plurality of intermediate outlets 15 forming the downstream end of the internal fluid channel 5. Each of the plurality of intermediate outlets 15 is in fluid communication with a respective channel in the cutting head 2, which, further downstream, ends in a respective one of multiple of outlets 7. Each of the multiple of outlets 7 is arranged at a respective one of the cutting inserts 4.

Finally, the cutting tool component comprises a deflection element 17. The main channel 9 and the deflection element 17 have such relative shape and dimensions that the deflection element 17 is insertable from the upstream end 6 and movable through the main channel 9 to the front end surface 11.

The deflection element 17 comprises a deflection surface 18. The deflection surface 18 is arranged in the main channel 9, wherein the deflection surface 18 has a front edge 19 at each respective opening 13 and converges rearward from the front edge 19 toward the main central axis 12. The front edge 19 is located radially inward of each the openings 13. Each of the plurality of openings 13 is delimited by a respective opening edge, wherein the front edge 19 of the deflection surface 18 is located in close proximity of the opening edges. The front edge 19 contacts the frustoconical front end surface 11 radially inward of and in close proximity to each of the openings 13. The deflection surface 18 is conical with an apex located on the main central axis 12.

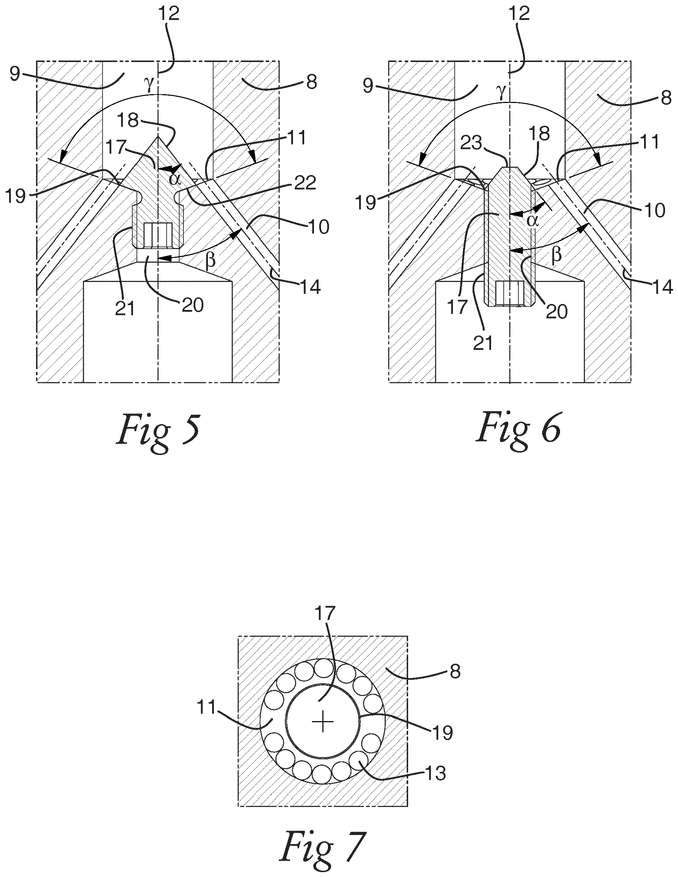

As seen in the enlarged longitudinal section of Fig. 5, the distribution central axis 14 of the distribution channel 10 forms an angle β with the main central axis, and the deflection surface forms an angle α with the main central axis, wherein, the angle α and the angle β differ by 2°.

The deflection element 17 comprises a connection portion in form of a tap 21 provided with an external thread. The thread of the tap 21 is in threaded engagement with the internal thread of the central axial hole 20, whereby the deflection element 17 is releasably fixed in the cutting tool component. Thus, the tap 21 and the central axial hole 20 constitute complementary connection portions.

The deflection element 18 comprises an abutment surface 22, which intersects and extends around the front edge 19 of the deflection surface 18, wherein the abutment surface 22 abuts against the front end surface 11 of the main channel. The abutment surface 22 has a radially outer portion, which, as seen in the enlarged longitudinal section of Fig. 5, extends in parallel with the frustoconical front end surface 11. flow of fluid between the deflection element and the front end surface is hindered. A sealing in form of sealing glue is applied between the abutment surface 22 and the front end surface 11 to prevent leakage of a fluid flow under the front edge 19 and through the central axial hole 20.

The first embodiment of the cutting tool component as described above is suitable for minimum quantity lubricating (MQL) machining. The nozzle ejects a fluid in form of a mist into the main channel 9 from the upstream rear end 6. The mist follows the main channel 9 in the axially direction of the main central axis 12 forward to the apex of the deflection surface 18 of the deflection element 17. The flow is divided and redirected radially outward and froward along the deflection surface 18. At the front edge 19, the fluid continues through the openings 13 into the distribution channels 10, wherein the flow follows the respective distribution central axis 14 along the extension of the distribution channels 10. Thanks to the deflection surface 18 being almost aligned with the distribution central axis 14, the directional change does not cause too much turbulence so that the delicate mixture of liquid and gas in the fluid is intact after entering the distribution channels 10. The fluid then leaves the main body through the intermediate outlets 15 and continues through further channels to the outlets 7 at the cutting inserts 4.

A second embodiment of the present invention, which differs from the first embodiment only in the design of the deflection element 17, is described with reference to Fig. 6, which shows a view corresponding to Fig. 5. The alternative deflection element 17 lacks the abutment surface 22 of the first embodiment. Instead, the threaded tap 21 extends from the front edge 19 of the deflection surface 18. Thus, the front edge 19 contacts the frustoconical surface 11 at the upstream rear end of the central axial hole 20. The deflection surface 18 is a frustoconical surface which is symmetrical around the main central axis 12. The deflection element 18 according to the second embodiment has an axial rear surface 23. The alternative deflection element 17 is insertable from a downstream end and movable until it protrudes through the front end surface 11 and is fixed in main channel 9.

## Claims

1. A cutting tool component for a metal cutting tool, wherein the component comprises a main body (8), which main body (8) comprises an internal fluid channel (5) extending from an upstream end (6) forward to a downstream end, and which internal fluid channel (5) comprises
- a main channel (9) which has a main front end and a main central axis (12), wherein the main channel (9) extends from the main front end rearward along the main central axis (12) toward the upstream end (6), and wherein the main channel (12) has a plurality of openings (13) at the main front end, and
- a plurality of distribution channels (10), wherein each distribution channel (10) extends from a respective one of the openings (13) forward toward the downstream end,
**characterized in that**
the cutting tool component further comprises a deflection element (17), which deflection element (17) comprises a deflection surface (18) arranged in the main channel (9), wherein the deflection surface (18) has a front edge (19) at each respective opening and converges rearward from the front edge (19) toward the main central axis (12).

2. The cutting tool component according to claim 1, wherein the main channel (9) has a rearwardly facing front end surface (11) at the front end, which front end surfaces (11) comprises the openings (13).

3. The cutting tool component according to claim 2, wherein the front end surface (11) comprises a frustoconical surface which, from a most forward end of the main channel (9), diverges rearward toward the upstream end (6).

4. The cutting tool component according to claim 2 or 3, wherein the entire front edge (19) of the deflection surface (18), with respect to the main central axis (12), is located radially inward of each of the openings (13).

5. The cutting tool component according to any of the preceding claims, wherein each distribution channel (10), with respect to the main central axis (12), extends radially outward and along a respective distribution central axis (14).

6. The cutting tool component according to claim 5, wherein, as seen in a longitudinal section, the distribution central axis (14) of each distribution channels (10) forms an angle α with the main central axis (12), and the deflection surface (18) forms an angle β with the main central axis (12), wherein, for at least a majority of the distribution channels (10), the angle α and the angle β differ at most by 5°.

7. The cutting tool component according to any preceding claim, wherein the deflection element (17) comprises a connection portion, and the main channel (9) comprises a complementary connection portion, which are configured to releasable fix the deflection element (17) in the cutting tool component.

8. The cutting tool component according to any of the claims 2-6, and claim 7, wherein the connection portion comprises a tap (21) extending forward through the front end surface into the main body (8).

9. The cutting tool component according to claim 7 or 8, wherein the main channel (9) and the deflection element (17) have such relative shape and dimensions that the deflection element (17) is insertable from an upstream end (6) and movable through the main channel (9) to be fixed in the cutting tool component by the connection portion and the complementary connection portion.

10. The cutting tool component according to any of the claims 2-9, wherein the deflection element (17) comprises an abutment surface (22), which intersects and extends around the front edge (19) of the deflection surface (18), wherein the abutment surface (22) abuts against the front end surface (11) of the main channel (11).

11. The cutting tool component according to any of the preceding claims, wherein the deflection surface (18) comprises a conical or frustoconical surface.

12. The cutting tool component according to any of the preceding claims, wherein each distribution channel (10) has a smaller cross section than the main channel (9).

13. The cutting tool component according to any of the preceding claims, wherein the cutting tool component is a tool holder (1) for carrying a cutting head (2).

14. A milling tool comprising the cutting tool component according to any of the preceding claims, wherein the milling tool further comprises a plurality of circumferentially spaced insert seats, wherein each of the distribution channels (10) is in fluid communication with a respective one of the insert seats.

15. A cutting tool, preferably a milling tool, comprising the cutting tool component according to any claim 1 - 13, further comprising a nozzle, which is configured to eject fluid in form of droplets or mist into the main channel from an upstream end thereof.
